# EUROPEAN PATENT APPLICATION

(11) **EP 4 056 861 A1**
(43) Date of publication of application: **14.09.2022**
(21) Application number: 20892656.8
(22) Date of filing: 26.05.2020
(51) Int. Cl.: F16B 19/08, F16B 21/00

(54) **POP RIVET FOR FASTENING AND CONNECTING CONDUCTIVE MATERIAL**

(30) Priority: 28.11.2019 CN 201911187964
(71) Applicant: Meishan CRRC Fastening System Co., Ltd, Meishan, Sichuan 620032 (CN)
(72) Inventor: HE, Xu, Meishan, Sichuan 620032 (CN); JIA, Yunlong, Meishan, Sichuan 620032 (CN); LI, Chuanqi, Meishan, Sichuan 620032 (CN); WANG, Shibo, Meishan, Sichuan 620032 (CN); ZHANG, Qin, Meishan, Sichuan 620032 (CN); DONG, Shuai, Meishan, Sichuan 620032 (CN); ZUO, Zongyang, Meishan, Sichuan 620032 (CN); LIU, Yu, Meishan, Sichuan 620032 (CN); DENG, Tao, Meishan, Sichuan 620032 (CN); JIANG, Juan, Meishan, Sichuan 620032 (CN)
(74) Representative: Ipside
(86) International application number: PCT/CN2020/092250
(87) International publication number: WO 2021/103448

(57) **Abstract**

A pop rivet for fastening connection of a conductive material consists of a rivet and a collar. The rivet comprises a cap head (1.1), a polished rod (1.2), a locking groove (1.3), a broached groove (1.4) and a short tail (1.5). The collar comprises a flange (2.1), a deformation region (2.2) and a snap tooth (2.3); and sharp protrusions (1.6) are provided on a contact surface between an inside of the cap head (1.1) and a fastening connector. The height of the protrusions is 1/5 to 1/12 of the thickness of the cap head, and one structure of the protrusions is a plurality of independent toothed protrusions evenly arranged on the contact surface between the inside of the cap head and the fastening connector; and another structure of the protrusions is one or two rings of annular protrusions surrounding the contact surface between the inside of the cap head and the fastening connector. The sharp protrusions can be embedded on a surface of a fastener, preventing sliding between the fastening connector and the rivet, improving conductivity between the rivet and a frame, effectively solving such problems as electrochemical corrosion, panel damage, and poor conductivity during the fastening connection of an aluminum alloy frame, and ensuring safe operation of a solar PV system.

## Description

### Technical Field

The present invention belongs to the technical field of riveting, in particular to design and manufacture of a pop rivet riveting fastener for connecting a conductive material, and belongs to rivet (B21J) and fastener (F16B) in the metal machining.

### Background of the Invention

Pop rivets are a commonly used fastening connectors in the existing fastening connection mode, and are generally used for connection of components that need to be bolted or riveted. When carrying out fastening operation, special equipment for pop rivets is used to clamp two parts to be combined, squeeze metal of a sleeved annular collar and fill pits of multiple annular grooves of a bolt, so that the collar and the bolt are tightly combined and fastened. Pop rivet fasteners have the same fastening force and never loosen after assembly.

The existing pop rivets have simple fastening and single function. After the fastening operation, the pop rivets and the connectors often complete the simple fastening connection only, and there is no requirement for further combination of the pop rivets and the fastening connectors. In connection processing of solar panel, it is not only necessary to fasten a connection plate, but also to further improve conductivity of a connection portion. However, because an oxide film and rust layer on the surface of the metal connector reduces the conductivity, the fastening connection in the form of plane contact cannot meet the needs of the connection processing of the existing battery panels.

### Summary of the Invention

The present invention discloses a pop rivet for fastening connection of a conductive material according to shortcomings of the prior art. The problem to be solved by the present invention is to provide a pop rivet for fastening connection of a conductive material which is capable of improving conductivity between metal connectors and has better performance.

The present invention is realized by the following technical solution:
A pop rivet for fastening connection of a conductive material is provided, the pop rivet consists of a rivet and a collar, the rivet comprises a cap head, a polished rod, a locking groove, a broached groove and a short tail, and the collar comprises a flange, a deformation region and a snap tooth, wherein sharp protrusions are provided on a contact surface between an inside of the cap head and a fastening connector.

Height of the protrusions is 1/5 to 1/12 of thickness of the cap head.

A structure of the protrusions of the present invention is a plurality of independent toothed protrusions evenly arranged on the contact surface between the inside of the cap head and the fastening connector.

Another structure of the protrusions of the present invention is one or two rings of annular protrusions surrounding the contact surface between the inside of the cap head and the fastening connector.

The protrusions of the present invention can also comprise a plurality of independent toothed protrusions evenly arranged on the contact surface between the inside of the cap head and the fastening connector and annular protrusions surrounding the contact surface between the inside of the cap head and the fastening connector.

The pop rivet of the present invention is used for aluminum alloy conductive materials.

When the pop rivet of the present invention is applied to the fastening connection of the conductive material, the pop rivet is capable of further increasing conductivity and preventing damage caused by excessive tightening torque during the fastening connection of the pop rivet due to thin fastening connectors.

When the pop rivet of the present invention is used for the fastening connection of an aluminum alloy frame of a solar panel, as the aluminum alloy frame is made of a soft material, the solar panel is often crushed and scrapped due to excessive tightening torque as the . At the same time, due to different potential difference between carbon steel and aluminum alloy, electrochemical corrosion occurs in application process, resulting in connection failure and bolt falling off. When an aluminum alloy bolt is used for the fastening connection of the aluminum alloy frame, due to low strength of the aluminum alloy bolt, the aluminum alloy frame cannot fully fit with the bolt after tightening. In case of strong current, a gap between the bolt and the aluminum alloy panel will discharge, resulting in the damage of the frame or the bolt, and the safety of a component thereof cannot be guaranteed.

Sharp protrusions with strength are provided on the inside of the rivet of the present invention. After the fastening connection, the sharp protrusions are embedded into the surface of the fastener, which not only prevents sliding of the fastener and the rivet, but also pierces an oxide film or anodic oxide film formed by metal on the surface of the aluminum alloy and oxygen after the sharp protrusions are embedded into the surface of the fastener (e.g., piercing into the aluminum alloy panel), so that the rivet and the aluminum alloy material form a close fitting entirety, improving the conductivity of the rivet and the frame, effectively solving such problems as electrochemical corrosion, panel damage, and poor conductivity during the fastening connection of the aluminum alloy frame, and ensuring safe operation of a solar PV system.

### Brief description of the Drawings

Figure 1 is a structural diagram of a rivet of the present invention;
Figure 2 is a structural diagram of a collar of the present invention;
Figure 3 is a structural diagram of an inside of a rivet cap head in embodiment 1;
Figure 4 is a cross-sectional structural diagram of the rivet in embodiment 1;
Figure 5 is a structural diagram of an inside of a rivet cap head in embodiment 2; and
Figure 6 is a cross-sectional structural diagram of the rivet in embodiment 2.

In the figures, 1.1 is a cap head, 1.2 is a polished rod, 1.3 is a locking groove, 1.4 is a broached groove, 1.5 is a short tail, 1.6 is a protrusion, 2.1 is a flange, 2.2 is a deformation region, 2.3 is a snap tooth, and H is height of the protrusions.

### Detailed Description of Embodiments

The present invention is further described below in combination with specific embodiments which further illustrate principles of the present invention and do not limit the present invention in any way. The same or similar technologies as the present invention are not beyond the protection scope of the present invention.

Refer to the figures.

As shown in the figures, a pop rivet for fastening connection of a conductive material, consists of a rivet and a collar. The rivet comprises a cap head 1.1, a polished rod 1.2, a locking groove 1.3, a broached groove 1.4 and a short tail 1.5. The collar comprises a flange 2.1, a deformation region 2.2 and a snap tooth 2.3. In the present invention, sharp protrusions 1.6 are provided on a contact surface between an inside of the cap head 1.1 and a fastening connector.

In the present invention, height of the protrusions 1.6 is 1/5 to 1/12 of thickness of the cap head 1.1.

The rivet and the collar can be made of aluminum alloy materials. The rivet is subject to solution aging treatment, and the surface is cleaned. The collar is softened to be suitable for cold extrusion riveting.

The pop rivet is mounted by conventional method, and height H of the protrusions shall be 1/5 to 1/12 of thickness of the cap head 1.1 so that the protrusions can pierce into the connected conductive material without excessive damage to the conductive material which will reduce strength thereof. After the protrusions 1.6 are embedded into a conductive panel, the protrusions 1.6 can prevent relative sliding between the rivet cap head and the connected part, improving strength of the fastening connection. At the same time, the protrusions pierce an oxide film or anodic oxide film formed by metal on the surface of the conductive material and oxygen, so that the rivet and the conductive material form a close fitting entirety, improving overall conductivity.

The protrusions of the present invention may have various structures, and the following embodiments are only used to illustrate the application thereof.

### Embodiment 1

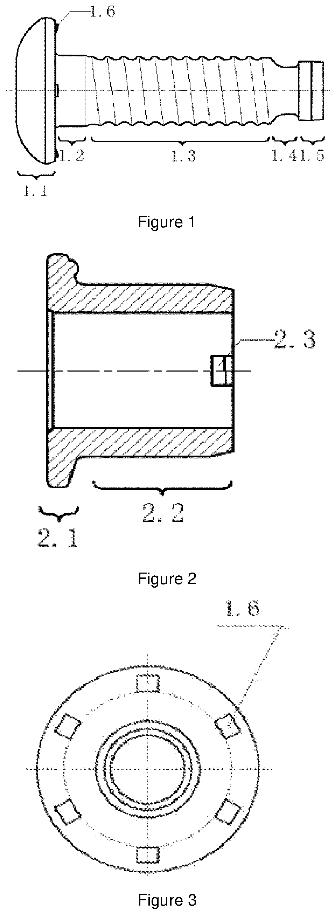

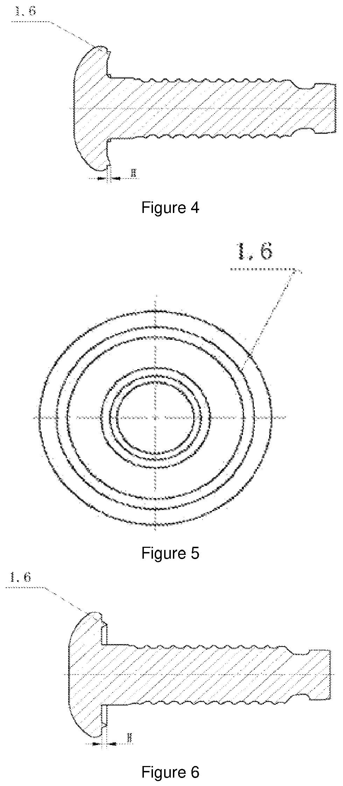

As shown in Figures 3 and 4, Figure 3 is a structural diagram of an inside of a rivet cap head in embodiment 1; and Figure 4 is a cross-sectional structural diagram of the rivet in embodiment 1. In the figures, six protrusions 1.6 are evenly arranged on the contact surface between the inside of the cap head 1.1 and the fastening connector, the protrusions 1.6 are sharp structures, and height thereof is 1/5 to 1/12 of the thickness of the cap head.

### Embodiment 2

As shown in Figures 5 and 6, Figure 5 is a structural diagram of an inside of a rivet cap head in embodiment 2; and Figure 6 is a cross-sectional structural diagram of the rivet in embodiment 2. In the figures, a ring of annular protrusions 1.6 are arranged surrounding the contact surface between the inside of the cap head 1.1 and the fastening connector, the protrusions 1.6 are sharp structures, and height thereof is 1/5 to 1/12 of the thickness of the cap head.

## Claims

1. A pop rivet for fastening connection of a conductive material, wherein the pop rivet consists of a rivet and a collar, the rivet comprises a cap head, a polished rod, a locking groove, a broached groove and a short tail, and the collar comprises a flange, a deformation region and a snap tooth, wherein sharp protrusions are provided on a contact surface between an inside of the cap head and a fastening connector.

2. The pop rivet according to claim 1, wherein the height of the protrusions is 1/5 to 1/12 of the thickness of the cap head.

3. The pop rivet according to claim 2, wherein the protrusions are a plurality of independent toothed protrusions evenly arranged on the contact surface between the inside of the cap head and the fastening connector.

4. The pop rivet according to claim 2, wherein the protrusions are one or two rings of annular protrusions surrounding the contact surface between the inside of the cap head and the fastening connector.

5. The pop rivet according to claim 2, wherein the protrusions comprise a plurality of independent toothed protrusions evenly arranged on the contact surface between the inside of the cap head and the fastening connector and annular protrusions surrounding the contact surface between the inside of the cap head and the fastening connector.

6. The pop rivet according to any of claims 1 to 5, wherein the conductive material is an aluminum alloy material.
